# EUROPÄISCHE PATENTSCHRIFT

(11) **EP 1 117 697 B1**
(45) Veröffentlichungstag und Bekanntmachung des Hinweises auf die Patenterteilung: **25.05.2005**
(21) Anmeldenummer: 99944305.4
(22) Anmeldetag: 30.07.1999
(51) Int. Cl.: C08F 2/44, C08F 265/06

(54) **KUNSTSTOFFFORMKÖRPER AUS GIESSHARZEN UND ANORGANISCHEN FÜLLSTOFFEN MIT VERBESSERTEN MECHANISCHEN UND THERMISCHEN EIGENSCHAFTEN UND VERBESSERTER FLAMMFESTIGKEIT**
MOULDED PLASTIC PARTS MADE OF CASTING RESINS AND INORGANIC FILLERS, PRESENTING IMPROVED MECHANICAL AND THERMAL PROPERTIES AND IMPROVED FLAME-RESISTANCE
CORPS MOULE EN MATIERE PLASTIQUE FORME DE RESINE MOULEE ET DE CHARGES INORGANIQUES, A PROPRIETES MECANIQUES ET THERMIQUES AMELIOREES ET A RESISTANCE A LA FLAMME AMELIOREE

(30) Priorität: 07.08.1998 DE 19835805
(43) Veröffentlichungstag der Anmeldung: 25.07.2001
(73) Patentinhaber: Röhm GmbH & Co. KG, 64293 Darmstadt (DE)
(72) Erfinder: SERVATY, Sabine, D-64331 Weiterstadt (DE); ITTMANN, Günther, D-64823 Gro -Umstadt (DE)
(86) Internationale Anmeldenummer: PCT/EP1999/005446
(87) Internationale Veröffentlichungsnummer: WO 2000/008064

(56) Entgegenhaltungen:
- EP-A- 0 253 211
- FR-A- 2 389 645
- CHEMICAL ABSTRACTS, vol. 79, no. 8, 27. August 1973 (1973-08-27) Columbus, Ohio, US; abstract no. 43225, "BUBBLE FREE POLY(METHYL METHACRYLATE) SHEETSCONTAINING INORGANIC FILLERS." Seite 28; Spalte 1; XP002125407 & JP 07 322535 A (KANEGAFUCHI CHEM. IND. CO.)

## Beschreibung

### Gebiet der Erfindung

Die Erfindung betrifft polymerisierbare Harzmassen zur Herstellung sehr füllstoffreicher Acrylharzformkörper und die daraus herstellbaren Artikel. Die Harzmassen weisen eine niedrige Viskosität sowie eine geringe Neigung zur Strukturviskosität auf.
Mit Hilfe der erfindungsgemäßen Zusammensetzung sind gefüllte Acrylbahnen und -platten mit hoher Flammhemmung, geringer Rauchentwicklung und leichter Handhabbarkeit herstellbar.

### Stand der Technik

Die Herstellung von Kunststoffgegenständen und Formkörpern aus Gießharz ist bereits bekannt. Enthalten die Gießharze hohe Füllstoffgehalte an z.B. Al(OH)₃ (> 60 Gew.-%) im Vergleich zur Polymermatrix aus Acryl- und/oder Methacrylsäureestern, zeigen die daraus hergestellten Gegenstände eine hohe Flammfestigkeit. Gute mechanische und thermische Eigenschaften, insbesondere ein gutes Umform- und Thermo-Schock-Verhalten können nur durch eine hinreichende Anbindung zwischen Polymermatrix und Füllstoff erreicht werden. Wie diese Anbindung hergestellt wird, ist ebenso Stand der Technik.

Bei Füllstoffgehalten < 60 Gew.-% werden die mechanischen und thermischen Eigenschaften der Gegenstände schon durch den geringeren Füllstoffgehalt besser. Die mechanischen und thermischen Eigenschaften der Kunststofformkörper sind so zu wählen und aufeinander abzustimmen, daß der Körper sowohl leicht umzuformen als auch gut spanend zu bearbeiten ist.

Aber die Flammfestigkeit wird bei Füllstoffgehalten < 60 Gew.-% schlechter, so daß z.B. für das Bestehen des B1-Tests entsprechende Flammschutzmittel verwendet werden müßten. Diese Additive wirken andererseits als Weichmacher, was wiederum die mechanischen und thermischen Eigenschaften negativ beeinflußt.

DE 28 18 954 (Rohm und Haas) beschreibt eine polymerisierbare Harzmasse aus einer Lösung eines Polymers in einem Monomer, wobei das Polymer aus mindestens 50 Gew.-% C₁-C₈-Alkylmethacrylat und 0,01 - 8 Gew.-% an ethylenisch ungesättigten Carbonsäureeinheiten aufgebaut ist und das Monomer aus mindestens 50 Gew.-% C₁-C₈-Alkylmethacrylat besteht, einem Polymerisationsinitiator und, bezogen auf das Gesamtgewicht der Masse, 40 - 80 Gew.-% an inertem, teilchenförmigen Füllstoff, wie beispielsweise hydratisiertes Aluminiumoxid, Calciumcarbonat, Tone, Siliciumdioxid, Silicate, Metalloxide und Mg(OH)₂ und MgO. Es können auch noch faserartige Verstärkungsstoffe zugesetzt werden. Die Flammhemmung wird durch hohe Füllstoffkonzentrationen erzielt.

EP 253 211 (Dynamit Nobel AG) beschreibt Gießharze aus Methacrylsäureestern mit einem hohen Anteil an Aluminiumhydroxid bzw. Aluminiumoxidhydrat als Füllstoff. Die Gießharze enthalten ein Gemisch aus mindestens je einer Organosiliciumverbindung mit funktioneller Gruppe, einem Kieselsäureester und einer organischen Metallsäureverbindung von Metallen der IV. und/oder V. Nebengruppe des Periodischen Systems der Elemente. Die funktionelle Gruppe der Organosiliciumverbindung ist ethylenisch ungesättigt und entweder direkt oder über Alkylengruppen mit dem Siliciumatom verbunden. Der Zusatz dieses Gemisches zu den an sich bekannten Gießharzen bewirkt durch eine Herabsetzung der Viskosität eine wünschenswerte Verbesserung der Verarbeitungseigenschaften der Harze. Aus diesen Harzen hergestellte Kunststoffgegenstände und Formkörper sind durch deutlich verbesserte Gebrauchseigenschaften ausgezeichnet.

EP 729 979 (DuPont) beschreibt Gießharze auf der Basis von härtbaren Acryl- und/oder Methacrylsäureestern und feinteiligen anorganischen Füllstoffen, die als Haftvermittler Organosiliziumverbindungen und Metallsäureester enthalten, wobei die Gießharzzusammensetzung Zirkoniumacetylacetonat und Wasser enthält.

WO 95/9207 (LVMH Recherche) beschreibt die Verwendung einer Mischung von Blockcopolymeren aus Acrylsäure oder Methacrylsäure und C₁-C₁₀-Alkylacrylaten oder C₁-C₁₀-Alkylmethacrylaten, die mineralische Füllstoffe und ein organisches Lösungsmittel enthält, in dem die Acrylsäure oder Methacrylsäure und C₁-C₁₀-Alkylacrylate oder C₁-C₁₀-Alkylmethacrylate löslich sind.
Diese Blockcopolymeren werden als Benetzungs- und Feuchthaltemittel für Mineralpartikel verwendet. Es werden auch Zusammensetzungen und kosmetische Präparate beschrieben.

WO 96/26977 (DuPont) beschreibt eine Methode, eine gute Bindung zwischen dem Füllstoff und dem Kunststoff zu erreichen. Als Bindemittel werden Phosphorsäureester von Estern der Acryl- oder Methacrylsäure mit mehrwertigen Alkoholen vorgeschlagen. Mechanische Eigenschaften der aus den Mischungen gewonnenen Formkörper werden nicht beschrieben.

EP 233 199 (Farge) beschreibt polymerisierbare Zusammensetzungen aus Methacrylsäureestern und Methacrylsäure, der Schwerpunkt der Erfindung liegt auf der guten Einbindung von Füllstoffen, wie beispielsweise SiO₂ oder Aluminiumpulver.

### Nachteile des Standes der Technik und Vorteile der Erfindung

Gegenstände aus Gießharzen auf PMMA-Basis mit Füllstoffgehalten von weniger als 60 Gew.-% zeigen verbesserte mechanische Eigenschaften. Die Schlagzähigkeit eines mit 60 Gew.-% Al(OH)₃ gefüllten Materials betrug 2,8 kJ/m², gemessen nach der Methode Charpy (DIN 54453, ISO 179), bei 55 Gew.-% Al(OH)₃ betrug die Schlagzähigkeit nach Charpy 4,5 kJ/m².
Diese Erhöhung der Schlagzähigkeit verringert die Bruchgefahr der erfindungsgemäß hergestellten Platten bei der Verarbeitung und Montage. Auch beim Abkanten einer 9 mm dicken, aus dem erfindungsgemäßen Material hergestellten Platte (55 Gew.-% Al(OH)₃) (Temperatur: 150 °C, Dauer: 3 min., Biegeradius: 50 mm) trat nur ganz geringe, nicht störende Weißfärbung des Materials auf, während Material mit 60 Gew.-% Al(OH)₃ bei ansonsten identischen Umformbedingungen eine merkliche und stark störende Weißfärbung aufwies.

Bei der spanabhebenden Verarbeitung neigt die aus dem erfindungsgemäßen Material hergestellte Platte zu weniger Staubentwicklung und zu sauberer Spanbildung beim Sägen als vergleichbare Platten, die nach den Vorschriften des Standes der Technik hergestellt sind.

Um die behördlich vorgeschriebenen Brandtests zu bestehen, beispielsweise den B1-Test nach DIN 4102, müssen Flammschutzmittel zugegeben werden. Flammschutzmittel wirken als Weichmacher, dadurch werden die thermischen und mechanischen Eigenschaften schlechter.

### Aufgabe

Es bestand also die Aufgabe, Kunststoffgegenstände mit Füllstoffen aus teilchenförmigen, anorganischen Füllstoffen, wie beispielsweise Al(OH)₃ herzustellen, die ohne oder nur mit derart wenig Flammschutzmittel ausgerüstet werden können, so daß die mechanischen und thermischen Eigenschaften nicht beeinträchtigt werden und trotzdem der B1-Test nach DIN 4102 bestanden wird.

### Lösung

Es wurde gefunden, daß unter Verwendung einer ungesättigten sauren Verbindung, durch Verwendung einer ungesättigten hydroxyfunktionellen Verbindung und/oder durch Verwendung einer ungesättigten epoxyfunktionellen Verbindung die mechanischen und thermischen Eigenschaften sowohl bei hohen als auch bei niedrigen Füllstoffgehalten besser werden. Außerdem ist bei Füllstoffgehalten weniger als 60 Gew.-% eine Zunahme der Flammfestigkeit zu beobachten.

Die Zunahme der Flammfestigkeit bei Füllstoffgehalten ≤ 60 Gew.-% war nicht zu erwarten.

Bei hohen Füllstoffgehalten von mehr als 60 Gew.-% Al(OH)₃ wird durch den hohen Feststoffgehalt B1 nach DIN 4102 erfüllt, darüberhinaus werden durch den Zusatz von ungesättigten oben beschriebenen Verbindungen die mechanischen Eigenschaften verbessert.

Bei Füllstoffgehalten < 60 Gew.-% wird B1 nach Din 4102 erfüllt und durch den Zusatz von ungesättigten oben beschriebenen Verbindungen die mechanischen Eigenschaften verbessert.

Dieser synergistische Effekt beruht vermutlich einerseits auf einer verbesserten Anbindung zwischen Polymermatrix und Füllstoff und andererseits auf einer intumneszierenden Wirkung der funktionellen Verbindung.

Zu den ungesättigten sauren Verbindungen zählen:
- Vinylgruppenhaltige polymerisierbare Säuren, wie beispielsweise Methacrylsäure, Acrylsäure, Maleinsäure, Fumarsäure oder Itaconsäure.
- Sulfonsäuren, wie beispielsweise Styrolsulfonsäure.
- saure Phosphorverbindungen (außer Phosphorsäure selbst), wie beispielsweise 2-Methacryloyloxyethylphosphat.
- durch ein oder mehrere Vinylgruppen substituierte aromatische Mono- oder Dicarbonsäuren, wie beispielsweise Styrolcarbonsäure.

Es können auch die Imide, Amide, Anhydride und Ester der vorstehend aufgeführten Carbonsäuren verwendet werden, wie beispielsweise Methacrylamid oder Maleinsäureanhydrid.

Zu den hydroxylierten Verbindungen zählen hydroxylierte Ester der Acrylsäure oder Methacrylsäure, wie beispielsweise Hydroxypropylmethacrylat, 2-Hydroxyethylmethacrylat, 2-Hydroxyethylacrylat.

Zu den epoxygruppenhaltigen Verbindungen zählen beispielsweise Glycidylmethacrylat.

Als Füllstoffe (Filler) werden verschiedene Typen von anorganischen Partikeln eingesetzt, beispielsweise Aluminiumoxid/oxidhydrat bzw. Magnesiumhydroxid.

Besonders bevorzugt wird Aluminiumhydroxid und AluminiumoxidHydrat verwendet.

Zweckmäßig wird bei den anorganischen Füllstoffen eine mittlere Korngröße der Füllstoffteilchen von 100 µm (Durchmesser), vorzugsweise von 75 µm nicht überschritten. Neben Füllstoffen mit monodisperser Größenverteilung können auch Gemische aus mindestens 2 Komponenten, deren mittlere Durchschnitts-Korngrößen solchermaßen beschaffen sind, daß ein Größenverhältnis zwischen den mittleren Durchschnittskorngrößen der großen Füllstoffteilchen und denjenigen der kleinen Füllstoffteilchen zwischen 10 : 1 und 2 : 1, bevorzugt zwischen 6 : 1 und 4 : 1 vorliegt. Füllstoffteilchen mit einer Korngröße < 0,1 µm sollen dabei nicht mehr als 10 % des Volumens aller Füllstoffteilchen ausmachen.

Die Teilchengröße wird gemäß den üblichen Verfahren bestimmt, wobei zur Teilchengrößenbestimmung die jeweils größten Abmessungen der Partikel herangezogen werden (vgl. beispielsweise B. Scarlett, Filtration & Separation, Seite 215, 1965). Das Mengenverhältnis zwischen großen und kleinen Füllstoffteilchen liegt im allgemeinen zwischen 4 : 1 und 1 : 4, bevorzugt 2 : 1 und 1 : 2, besonders bevorzugt bei 1 : 1.

Der Füllstoffanteil an den Gießharzen der vorliegenden Erfindung beträgt mindestens 30 Gew.-%. Eine Verbesserung der mechanischen Eigenschaften wird bereits bei geringen Gehalten der erfindungsgemäßen Verbindungen erreicht. Im allgemeinen wird ein Anteil von 80 Gew.-% nicht überschritten, wobei als Richtwert ein Füllgehalt der Gießharze 50 bis 80 Gew.-% angegeben sei. Für die Verbesserung der thermischen Eigenschaften (Brandverhalten) ist ein Füllstoffgehalt von mindestens 50 Gew.-% und der gleichzeitige Einsatz der erfindungsgemäßen Verbindung erforderlich. Die Herstellung der Füllstoffe in den zweckmäßigen Korngrößen kann nach den bekannten Verfahren erfolgen, beispielsweise durch Brechen und Mahlen.

### BEISPIELE

### Beispiel 1 (Vergleichsbeispiel)

Herstellung von Plattenmaterial ohne erfindungsgemäßen Zusatz, mit 55 % Al(OH)₃-Gehalt.

In Methylmethacrylat (MMA) wird die Menge Polymethylmethacrylat (PMMA) mit einem Mw von ca. 400.000 gelöst, so daß die Auslaufzeit des dadurch erhaltenen Sirups, gemessen mit einem DIN Becher mit einer Auslauföffnung von 4 mm, 150 Sekunden beträgt.
In 432,47 g eines auf diese Weise hergestellten Sirups werden 0,03 g 2,4-Dimethyl-6-tert.butylphenol, 0,5 g Glykoldimethacrylat, 1,0 g Soja-Lecithin Konzentrat STA der Fa. Lanco und 10,0 Diethylphthalat gelöst.
Am Dissolver werden unter mäßigem Rühren 4,5 g Aerosil® 200 (Degussa AG), 275 ALCOA® C33 (Fa. Alcoa) und 275 g ALCOA® C333 (Fa. Alcoa) in diesen MMA/PMMA Sirup eingetragen. Danach wird die Suspension mit dem Dissolver (Typ HD 75 der Fa. Getzmann, BRD) mit 20 m/sec. ca. 10 Minuten dispergiert. Am nächsten Tag wird in dieser Suspension mit einem Flügelrührer 1,5 g tert.-Butylperneodecanoat (75 % in Aliphaten) gelöst. Die eingeschlossenen Luftbläschen werden unter Anlegen eines Vakuums aus der Suspension entfernt.

Aus 2 Silikatglasscheiben (Dicke 6 mm) wird mit einer runden PVC-Schnur (Durchmesser 4 mm) eine Kammer gebaut. In den Zwischenraum der Silikatglaskammer wird die oben beschriebene Suspension eingefüllt und die Kammer verschlossen. Die Kammerfüllung wird in einem Wasserbad von 50 °C innerhalb von 3,5 Stunden ausgehärtet. Die Endpolymerisation wird innerhalb von 2 Stunden bei einer Temperatur von 110 °C durchgeführt. Bei Erreichen von Zimmertemperatur wird die Kammer entformt und der beidseitig hochglänzende Plattengießling entnommen.

### Beispiel 2

Herstellung von Plattenmaterial mit einem relativ hohen erfindungsgemäßen Zusatz an saurer, ungesättigter Verbindungen mit 55 % Al(OH)₃-Gehalt.
Es wird verfahren analog dem Beispiel 1, wobei bei der Suspensionsherstellung dem Ansatz 30 g Methacrylsäure zugesetzt wird, wobei sich die Menge MMA/PMMA Sirup um 30 g reduziert.

### Beispiel 3

Herstellung von Plattenmaterial mit einem relativ niedrigen erfindungsgemäßen Zusatz an saurer, ungesättigter Verbindung, mit 55 % Al(OH)₃-Gehalt.
Es wird verfahren analog dem Beispiel 1, wobei bei der Suspensionsherstellung dem Ansatz 5,0 g Methacrylsäure zugesetzt wird, wobei sich die Menge MMA/PMMA Sirup um 5,0 g reduziert.

### Beispiel 4 (Vergleichsbeispiel)

Herstellung von Plattenmaterial ohne erfindungsgemäßen Zusatz, mit 60 % Al(OH)₃-Gehalt.
Es wird verfahren analog dem Beispiel 1, wobei bei der Suspensionsherstellung 300 g ALCOR® C33 und 300 g ALCOA® C333 verwendet werden, wobei sich die Menge MMA/PMMA Sirup um 50 g reduziert und die Auslaufzeit des Sirups, gemessen mit dem DIN-Becher 4 mm, 120 Sekunden beträgt.

### Beispiel 5

Herstellung von Plattenmaterial mit einem relativ hohen erfindungsgemäßen Zusatz an saurer, ungesättigter Verbindung mit 60 % Al(OH)₃-Gehalt.
Es wird verfahren analog dem Beispiel 4 wobei bei der Suspensionsherstellung dem Ansatz 30 g Methacrylsäure zugesetzt wird, wobei sich die Menge MMA/PMMA-Sirup um 30 g reduziert.

### BEISPIELSTABELLE

| | Zugfestigkeit ISO 527-2/1b/5 [MPa] | E-Modul ISO 527-2/1B/5 [MPa] | Biegefestigkeit ISO 178 [MPa] | B1-Test DIN 4102 bestanden |
|---|---|---|---|---|
| Beispiel 1 (Vergleichsbeispiel) | 31,0 | 7100 | 59,0 | nein |
| Beispiel 2 | 49,0 | 8300 | 74,0 | ja |
| Beispiel 3 | 46,0 | 8000 | 72,0 | nicht geprüft |
| Beispiel 4 (Vergleichsbeispiel) | 32,0 | 8000 | 52,0 | ja |
| Beispiel 5 | 50,0 | 9000 | 73,0 | ja |

**Tabelle 1**

| Al(OH)₃ Gew.-% | Zusatz Gew.-% | Brandverhalten VFT | Brandverhalten UL 94H13 | | Mechanik | |
|---|---|---|---|---|---|---|
| | | | verl. n. (sec.) | str. (mm) | E-Modul (mPa) | Zugfest. (mPa) |
| 55 | - | 2 | | | 5964 | 25,7 |
| 55 | 3, Methacrylsäure | 5 | | | 8021 | 48,6 |
| 60 | - | 5 | | | 7791 | 30,9 |
| 60 | 3, Methacrylsäure | 5 | | | 9022 | 49,9 |
| 55 | - | 2 | | | 6929 | 28,9 |
| 55 | 3, Methacrylsäure | 4 | | | 8554 | 49,3 |
| 55 | 2, Methacrylsäure | 4 | | | 8388 | 48,3 |
| 55 | 1, Methacrylsäure | 4 | | | 8139 | 45,8 |
| 55 | 0,5 Methacrylsäure | 3 | | | 7964 | 45,9 |
| 55 | - | | 15 | 9,6 | | |
| 55 | 2, Methacrylsäure | | 0 | 10,0 | | |
| 55 | 3, Methacrylsäure | | 0 | 5,0 | | |

**Tabelle 2**

| Al(OH)₃ Gew.-% | Zusatz Gew.-% | Brandverhalten VFT | Brandverhalten UL 94H13 | | Mechanik | |
|---|---|---|---|---|---|---|
| | | | verl. n. (sec.) | str. (mm) | E-Modul (mPa) | Zugfest. (mPa) |
| 55 | - | | 88 | 13,2 | 7532 | 30,2 |
| 55 | 3, Methacrylsäureanhydrid | | 39 | 9,6 | 8352 | 38,9 |
| 55 | 3, Hydroxypropylmethacrylat | | 53 | 11,0 | 7900 | 37,5 |
| 55 | 3, Maleinsäureanhydrid | | 42 | 10,8 | 7482 | 35,2 |
| 55 | 3, Maleinsäure | | 39 | 11,6 | 8473 | 44,5 |
| 55 | 3, Acrylsäure | | 35 | 11,2 | 8690 | 45,6 |
| 55 | 3, N-Methoxymethylmethacrylamid | | 41 | 12,0 | 7479 | 31,0 |
| 55 | 3, Methacrylsäure | | 5 | 12,4 | 8020 | 40,6 |
| 55 | 3, 2-Hydroxyethylmethacrylat | | 29 | 12,8 | 7442 | 35,8 |
| 55 | 3, Glycidylmethacrylat | | 39 | 11,0 | 7582 | 38,9 |
| 55 | 3, 2-Methacryloyloxyethylphosphat | Verbund | | | | |

**Tabelle 3**

| CREANIT® | Al(OH)₃ | erfüllt B1 | Rauchgastemperatur °C | Restlängen (cm) |
|---|---|---|---|---|
| Roma 3525 | 55 | nein | 211 | 17, 20, 21, 19 |
| Montreal 3726 | 60 | ja | 170 | 60, 58, 58, 59 |
| Montreal 3726 | 60 | ja | 170 | 55, 57, 53, 58 |
| Kent 3002 | 66 | ja | 167 | 31, 32, 33, 31 |
| Kent 3002 | 66 | ja | 198 | 19, 17, 17, 17 |

Unter Creanit® versteht man ein Plattenmaterial aus Polymethylmethacrylat, welches mit mineralischen oder anderen Füllstoffen gefüllt ist. Die Bezeichnungen ROMA, MONTREAL und KENT stellen Farbnummern dar. Das Material wird von der Röhm GmbH vertrieben.

## Patentansprüche

1. Polymerisierbare Harzmasse mit einem Gehalt an Füllstoffen von 30 Gew.-% bis 80 Gew.-%, bezogen auf die Harzmasse,
**dadurch gekennzeichnet,**
**dass** der polymerisierbaren Harzmasse
a) 0,01 Gew.-% - 5 Gew.-% an ethylenisch ungesättigten Monomeren, Carbonsäuren oder Carbonsäurederivaten
und/oder
ungesättigten epoxyfunktionellen Verbindungen
und
b) 0,01 Gew.-% - 5 Gew.-% an Vernetzern
und
c) 0,01 Gew.-% - 5 Gew.-% an ethylenisch ungesättigten Amiden oder Anhydriden
und/oder
Glycidylmethacrylat
und/oder
ein ethylenisch ungesättigtes Comonomer mit einer oder mehreren Hydroxygruppen zugesetzt wird und dass der Gehalt an Flammschutzmitteln 5 Gew.-% nicht übersteigt.

2. Polymerisierbare Harzmasse nach Anspruch 1,
**dadurch gekennzeichnet**
**dass** als Füllstoff Al(OH₃) verwendet wird.

3. Formkörper, hergestellt aus einem Material, erhältlich nach einem der vorhergehenden Ansprüche.

4. Verwendung des Materials nach einem der Ansprüche 1 oder 2 zur Herstellung von Formkörpern.

## Claims

1. Polymerisable resin composition with a filler content of from 30 to 80 wt.%, based on the resin composition,
**characterised in that**
a) 0.01 wt.% - 5 wt.% of ethylenically unsaturated monomers, carboxylic acids or carboxylic acid derivatives
and/or
unsaturated epoxy-functional compounds
and
b) 0.01 wt.% - 5 wt.% of crosslinkers
and
c) 0.01 wt.% - 5 wt.% of ethylenically unsaturated amides or anhydrides and/or
glycidyl methacrylate
and/or
an ethylenically unsaturated comonomer with one or more hydroxy groups
are added to the polymerisable resin composition, and **in that** the content of flame retardants does not exceed 5 wt.%.

2. Polymerisable resin composition according to claim 1, **characterised in that** Al(OH₃) is used as the filler.

3. Moulding produced from a material obtainable according to one of the preceding claims.

4. Use of the material according to one of claims 1 or 2 for producing mouldings.

## Revendications

1. Masse de résine polymérisable ayant une teneur en charges de 30 % en poids à 80 % en poids par rapport à la masse de résine,
**caractérisée en ce qu'**
on ajoute à la masse de résine polymérisable
a) 0,01 % en poids à 5 % en poids de monomères éthyléniquement insaturés, d'acides carboxyliques ou de dérivés d'acides carboxyliques
et/ ou
de composés insaturés à fonction époxy, et
b) 0,01 % en poids à 5 % en poids de réticulants, et
c) 0,01 % en poids à 5 % en poids d'amides ou d'anhydrides éthyléniquement insaturés
et/ou
du méthacrylate de glycidyle
et/ou
un comonomère éthyléniquement insaturé avec un ou plusieurs groupes hydroxy, et
la teneur en agents pare-flammes n'excède par 5 % en poids.

2. Masse de résine polymérisable selon la revendication 1
**caractérisée en ce qu'**
on utilise Al(OH₃) en tant que charge.

3. Corps moulé, fabriqué à partir d'une matière que l'on peut obtenir selon l'une quelconque des revendications précédentes.

4. Utilisation de la matière selon l'une quelconque des revendications 1 ou 2 pour fabriquer des corps moulés.
